# EUROPÄISCHE PATENTANMELDUNG

(11) **EP 1 845 659 A1**
(43) Veröffentlichungstag der Anmeldung: **17.10.2007**
(21) Anmeldenummer: 06007768.2
(22) Anmeldetag: 13.04.2006
(51) Int. Cl.: H04L 12/28

(54) **Anordnung mit zumindest zwei Funkfeldern und Verfahren zu deren Betrieb**

(71) Anmelder: Aastra DeTeWe GmbH, 10997 Berlin (DE)
(72) Erfinder: Püschel, Lutz, 10551 Berlin (DE); Tielmann, Jörg, 12247 Berlin (DE)
(74) Vertreter: Fischer, Uwe

(57) **Zusammenfassung**

Die Erfindung bezieht sich u. a. auf eine Anordnung mit zumindest zwei Funkfeldern (10, 20), wobei jedes Funkfeld jeweils ein leitungsgebundenes Netzsegment (70, 100) sowie ein oder mehrere daran leitungsgebunden angeschlossene Funknetzzugriffseinrichtungen (40, 50, 60, 110, 120, 130)) aufweist, an die jeweils Mobilfunkendgeräte (10) funkmäßig anschließbar sind, und wobei die Netzsegmente der mindestens zwei Funkfelder an eine Verbindungseinrichtung (90) angeschlossen sind, die die beiden Netzsegmente miteinander verbindet.

Erfindungsgemäß ist vorgesehen, dass, eine Steuereinrichtung (300) vorhanden ist, die derart ausgestaltet ist, dass sie, sobald eines der Mobilfunkendgeräte von einem der Funkfelder zu einem anderen der Funkfelder wechselt, selbsttätig die Übertragungseigenschaften zumindest in einem Punkt oder in einem Abschnitt der dem Mobilfunkendgerät, das das Funkfeld gewechselt hat, zur Verfügung stehenden Übertragungswege neu parametriert.

## Beschreibung

Die Erfindung bezieht sich auf eine Anordnung mit den Merkmalen gemäß dem Oberbegriff des Anspruchs 1. Unter dem Begriff Netzsegment ist in diesem Zusammenhang ein eigenständiges, separates Netzwerk mit homogenen einheitlichen Übertragungseigenschaften oder ein Abschnitt eines komplexen übergeordneten Netzwerks mit im Abschnitt homogenen einheitlichen Übertragungseigenschaften zu verstehen.

Beispielsweise auf dem Gebiet der Mobilfunktechnik sind Anordnungen mit zumindest zwei Funkfeldern bekannt, bei denen jedes Funkfeld jeweils ein leitungsgebundenes Netzsegment sowie ein oder mehrere daran leitungsgebunden angeschlossene Funknetzzugriffseinrichtungen - wie zum Beispiel Basisstationen - aufweist. An jede Funknetzzugriffseinrichtung können wiederum jeweils ein oder mehrere Mobilfunkendgeräte per Funk angeschlossen werden. Die Netzsegmente der Funkfelder sind beispielsweise mittels einer Verbindungseinrichtung miteinander verbunden, um eine Kommunikation zwischen den Netzsegmenten und damit eine Kommunikation zwischen den Funkfeldern zu ermöglichen.

Der Erfindung liegt die Aufgabe zugrunde, eine Anordnung der eingangs angegebenen Art dahingehend zu verbessern, dass Probleme bei einem Funkfeldwechsel eines Mobilfunkendgeräts von einem Funkfeld zu einem anderen Funkfeld vermieden werden und ein möglichst optimales Übertragungsverhalten auch im Falle eines solchen Funkfeldwechsels sichergestellt wird.

Diese Aufgabe wird erfindungsgemäß dadurch gelöst, dass die Anordnung eine Steuereinrichtung aufweist, die derart ausgestaltet ist, dass sie, sobald eines der Mobilfunkendgeräte von einem der Funkfelder zu einem anderen der Funkfelder wechselt, selbsttätig eine Neuparametrierung der Übertragungseigenschaften zumindest in einem Punkt oder zumindest in einem Abschnitt der Übertragungswege vornimmt, die dem Mobilfunkendgerät, das das Funkfeld gewechselt hat, zur Verfügung stehen. Ein Punkt eines dem Mobilfunkendgerät zur Verfügung stehenden Übertragungswegs kann beispielsweise durch einen Netzwerkknoten (z. B. Funknetzzugriffseinrichtung, Router, Bridge, etc.) des Netzsegments des neuen Funkfeldes gebildet sein; ein Abschnitt eines dem Mobilfunkendgerät zur Verfügung stehenden Übertragungswegs kann beispielsweise durch einen Übertragungsabschnitt zwischen zwei unmittelbar benachbarten oder mittelbar benachbarten Netzwerkknoten (z. B. Funknetzzugriffseinrichtung, Router, Bridge, etc.) des Netzsegments des neuen Funkfeldes gebildet sein.

Ein wesentlicher Vorteil der erfindungsgemäßen Anordnung ist darin zu sehen, dass durch die erfindungsgemäß vorgesehene Steuereinrichtung im Falle eines Funkfeldwechsels eine automatische Anpassung an die neue Übertragungssituation vorgenommen wird, indem eine entsprechende Neuparametrierung der Übertragungseigenschaften durchgeführt wird. Dies soll nachfolgend anhand eines Beispiels näher verdeutlicht werden: Befindet sich beispielsweise ein Mobilfunkendgerät in einem Funkfeld, dessen zugehöriges Netzsegment sehr leistungsfähig ist, so kann das Mobilfunkendgerät entsprechend große Übertragungskapazitäten in Anspruch nehmen, beispielsweise, indem es eine große Übertragungsrate beansprucht. Bewegt sich das Mobilfunkendgerät nun in ein anderes Funkfeld, bei dem aus welchen Gründen auch immer weniger große Übertragungskapazitäten zur Verfügung stehen, so kann es unter Umständen zu Übertragungsstörungen bzw. -unterbrechungen kommen. An dieser Stelle setzt die Erfindung an, indem erfindungsgemäß eine Steuereinrichtung vorgesehen wird, die einen Funkfeldwechsel erkennt und eine automatische Neuparametrierung der Übertragungseigenschaften vornimmt.

Eine ausreichende Neuparametrierung kann je nach der Übertragungssituation unter Umständen bereits erreicht werden, wenn die Übertragungseigenschaften in einem einzigen Punkt oder in einem einzigen Abschnitt der dem Mobilfunkendgerät insgesamt zur Verfügung stehenden Übertragungswege neu parametriert werden. Ein solcher Fall kann beispielsweise vorliegen, wenn nur ein einziger Punkt oder ein einziger Abschnitt zu Übertragungsproblemen führen könnte.

Falls beispielsweise ein "Übertragungsengpass" auf begrenzten Übertragungsmöglichkeiten zwischen dem neuen Netzsegment und der daran angeschlossenen Verbindungseinrichtung beruht, so wird es als vorteilhaft angesehen, wenn die Steuereinrichtung die Übertragungseigenschaften zumindest in einem Punkt oder in einem Abschnitt des Verbindungsweges zwischen dem Mobilfunkendgerät, das das Funkfeld gewechselt hat, und der Verbindungseinrichtung neu parametriert.

Beruht ein "Engpass" beispielsweise auf der geringeren Leistungsfähigkeit des gesamten neuen Netzsegments, so wird es als vorteilhaft angesehen, wenn die Steuereinrichtung die Übertragungseigenschaften jeweils für jeden Übertragungsweg neu parametriert, der dem Mobilfunkendgerät, das das Funkfeld gewechselt hat, im neuen Netzsegment zur Verfügung steht; eine solche Neuparametrierung kann beispielsweise erfolgen, indem für jeden Übertragungsweg jeweils zumindest in einem Punkt oder in einem Abschnitt die Übertragungseigenschaften neu parametriert werden.

Wie bereits erwähnt, lässt sich die Anordnung aufgrund der Steuereinrichtung auch dann sicher betreiben, wenn die leitungsgebundenen Netzsegmente der zumindest zwei Funkfelder unterschiedliche Übertragungseigenschaften aufweisen. Entsprechendes gilt, wenn die leitungsgebundenen Netzsegmente der Funkfelder identische Übertragungseigenschaften aufweisen und sich nur die Übertragungseigenschaften der Verbindungseinrichtung von denen der beiden Netzsegmente unterscheidet.

Die Übertragungseigenschaften können sich beispielsweise bezüglich der Bandbreiten, der Paketlaufzeiten, der Paketverlustraten und/oder des Jitters unterscheiden.

Die Steuereinrichtung wird die Neuparametrierung der Übertragungseigenschaften vorzugsweise mit dem Ziel vornehmen, dass für das Mobilfunkendgerät, das das Funkfeld gewechselt hat, eine vorgegebene Mindestübertragungsqualität (Quality of Service) erreicht wird.

Bei den Netzsegmenten kann es sich beispielsweise um LAN-Netzwerke handeln, vorzugsweise um solche, die IP(Internetkompatible)-Datenpakete übertragen oder zumindest übertragen können.

Die Steuereinrichtung kann die Neuparametrierung der Übertragungseigenschaften beispielsweise durchführen, indem sie den Komprimierungsgrad der zu übermittelnden Daten, die Priorität der zu übermittelnden Datenpakete und/oder die Paketgröße der zu übermittelnden Datenpakete ändert. Solche oder andere Änderungen können in einzelnen, mehreren oder allen Netzknoten (z. B. Router, Bridge, etc.) der Netzsegmente, einzelnen oder allen Kommunikationskomponenten der Verbindungseinrichtung, einzelnen oder allen Funknetzzugriffseinrichtungen und/oder einzelnen oder allen Mobilfunkendgeräten vorgenommen werden.

Bei den Funknetzzugriffseinrichtungen handelt es sich vorzugsweise um WLAN-Access-Points und bei den Mobilfunkendgeräten vorzugsweise um WLAN-Endgeräte. Genauso gut kann es sich bei den Funknetzzugriffseinrichtungen um DECT-Basisstationen und bei den Mobilfunkendgeräten um DECT-Mobilteile handeln.

Beispielsweise nimmt die Steuereinrichtung die Neuparametrierung der Übertragungseigenschaften dadurch vor, dass sie auch oder ausschließlich das Mobilfunkendgerät neu parametriert. Eine solche Neuparametrierung kann beispielsweise bei WLAN-Endgeräten durchgeführt werden, indem dem WLAN-Endgerät neue Übertragungsparameter wie Datenpaketgrößen, Komprimierungsgrad, CODEC etc. mitgeteilt werden, die das WLAN-Endgerät umzusetzen hat.

Alternativ oder zusätzlich kann die Steuereinrichtung die Neuparametrierung der Übertragungseigenschaften dadurch vornehmen, dass sie auch oder ausschließlich die Funknetzzugriffseinrichtung, zu dem das Mobilfunkendgerät gewechselt hat, neu parametriert. Eine solche Neuparametrierung kann beispielsweise bei DECT- Basisstationen durchgeführt werden, indem der DECT-Basisstation neue Übertragungsparameter wie Datenpaketgrößen, Komprimierungsgrad, CODEC etc. mitgeteilt werden, die die DECT-Basisstation umzusetzen hat.

Besonders bevorzugt wird die Steuereinrichtung die Übertragungseigenschaften funkfeldübergreifend derart parametrieren, dass alle Übertragungswege berücksichtigt werden, auf die das Mobilfunkendgerät, das ein Funkfeld gewechselt hat, in ein Funkfeld neu eintritt oder darin neu eingeschaltet bzw. angemeldet worden ist, zugreifen kann. Dabei wird die Steuereinrichtung die Parametrierung vorzugsweise derart vornehmen, dass eine Daten- oder Sprachübertragung auch über den leistungsschwächsten Übertragungsweg (z. B. wegen geringer Bandbreite, großem Jitter, hohen Paketverlusten) mit einem vorgegebenen Mindestqualitätsstandard (Quality of Service) erfolgen kann.

Die Erfindung bezieht sich außerdem auf ein Verfahren zum Betreiben einer Anordnung, wie sie eingangs beschrieben ist.

Um bei einem solchen Verfahren Probleme bei einem Funkfeldwechsel von Mobilfunkendgeräten zu vermeiden und ein möglichst optimales Übertragungsverhalten auch im Falle eines solchen Funkfeldwechsels sicherzustellen, wird erfindungsgemäß vorgeschlagen, dass festgestellt wird, wenn eines der Mobilfunkendgeräte von einem der Funkfelder zu einem anderen Funkfeld wechselt, und dass in einem solchen Fall eine Neuparametrierung der Übertragungseigenschaften zumindest in einem Punkt oder in einem Abschnitt der dem Mobilfunkendgerät, das das Funkfeld gewechselt hat, zur Verfügung stehenden Übertragungswege vorgenommen wird.

Bezüglich der Vorteile des erfindungsgemäßen Verfahrens sei auf die obigen Ausführungen im Zusammenhang mit der erfindungsgemäßen Anordnung verwiesen, da die Vorteile des Verfahrens den Vorteilen der Anordnung entsprechen.

Die Erfindung wird nachfolgend anhand von Ausführungsbeispielen näher erläutert, dabei zeigen beispielhaft
- Figur 1: ein erstes Ausführungsbeispiel für eine erfindungsgemäße Anordnung, bei der eine Steuereinrichtung mit einer Verbindungseinrichtung verbunden ist,
- Figur 2: ein zweites Ausführungsbeispiel für eine erfindungsgemäße Anordnung, bei der eine Steuereinrichtung innerhalb einer Vermittlungseinrichtung der Anordnung integriert ist,
- Figur 3: ein drittes Ausführungsbeispiel für eine erfindungsgemäße Anordnung, bei der eine Steuereinrichtung an ein Netzsegment eines Funkfeldes angeschlossen ist, und
- Figur 4: ein viertes Ausführungsbeispiel für eine erfindungsgemäße Anordnung, bei der eine Steuereinrichtung innerhalb einer Funknetzzugriffseinrichtung eines der Funkfelder integriert ist.

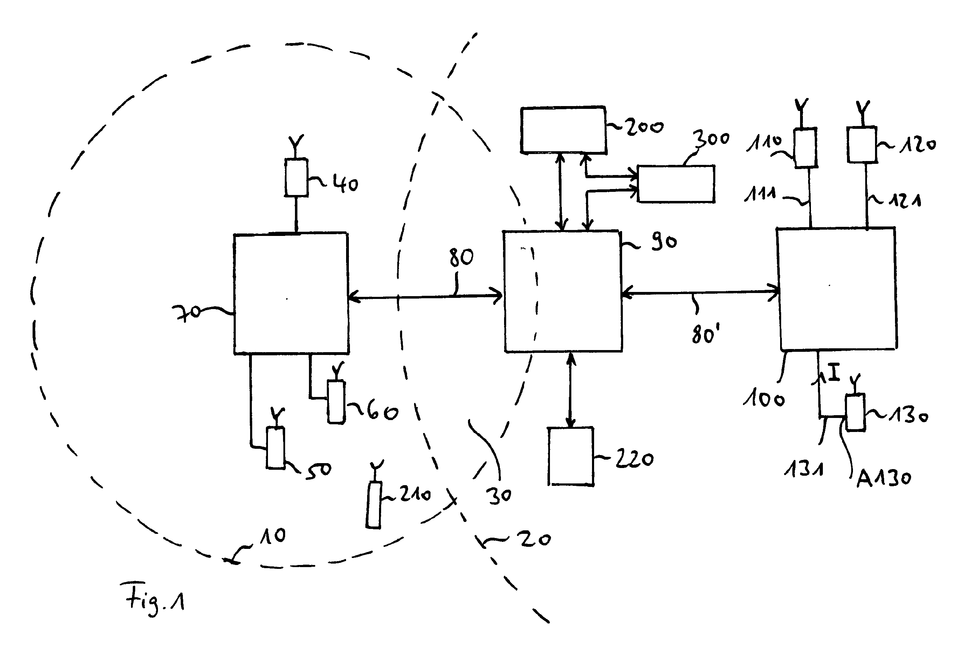

In den Figuren 1 bis 4 werden für identische oder vergleichbare Komponenten der Übersicht halber dieselben Bezugszeichen verwendet.

In der Figur 1 sind zwei Funkfelder 10 und 20 dargestellt, die sich zum Teil überlappen. Der Überlappungsbereich ist mit dem Bezugszeichen 30 gekennzeichnet.

Das Funkfeld 10 wird durch insgesamt drei Funkzellen gebildet, die durch drei Funknetzzugriffseinrichtungen hervorgerufen werden. Die drei Funknetzzugriffseinrichtungen des Funkfeldes 10 sind in der Figur 1 mit den Bezugszeichen 40, 50 und 60 gekennzeichnet; die Funkzellen selbst sind nicht näher eingezeichnet.

Wie sich in der Figur 1 darüber hinaus erkennen lässt, sind die drei Funknetzzugriffseinrichtungen 40, 50 und 60 jeweils mit einem leitungsgebundenen Netzsegment 70 verbunden, bei dem es sich beispielsweise um ein paketorientiertes Netzwerk handeln kann. Das Netzsegment 70 überträgt beispielsweise Datenpakete im Internet-kompatiblen Format. Bei dem Netzsegment 70 kann es sich zum Beispiel um ein LAN-Netzwerk handeln, das z. B. im Ethernet-Standard arbeitet.

Das Netzsegment 70 des Funkfeldes 10 steht über eine Verbindungsleitung 80 mit einer Verbindungseinrichtung 90 in Verbindung, die das Netzsegment 70 des Funkfeldes 10 über eine weitere Verbindungsleitung 80' mit einem Netzsegment 100 des Funkfeldes 20 verbindet.

Das Funkfeld 20 wird beispielsweise ebenfalls durch drei Funkzellen gebildet, die von drei Funknetzzugriffseinrichtungen 110, 120 und 130 hervorgerufen werden. Die drei Funknetzzugriffseinrichtungen sind über entsprechende Anschlussleitungen 111, 121 und 131 mit dem Netzsegment 100 des Funkfeldes 20 verbunden. Bei dem Netzsegment 100 kann es sich ebenfalls um ein paketorientiertes Netzwerk handeln, das Datenpakete gemäß dem Internet-Standard überträgt.

In der Figur 1 lässt sich außerdem erkennen, dass die Verbindungseinrichtung 90 mit einer Vermittlungseinrichtung 200 in Verbindung steht, die beispielsweise eine Sprach- und Datenübertragung zwischen mit den Funkfeldern 10 und 20 in Verbindung stehenden Mobilfunkendgeräten, von denen in der Figur 1 eines beispielhaft mit dem Bezugszeichen 210 gekennzeichnet ist, und sonstigen mit der Verbindungseinrichtung 90 in Verbindung stehenden Telekommunikationsendgeräten organisiert. Ein solches Telekommunikationsendgerät kann beispielsweise durch ein schnurgebundenes, z. B. analoges Telefon gebildet sein, das in der Figur 1 mit dem Bezugszeichen 220 gekennzeichnet ist.

In der Figur 1 ist darüber hinaus eine Steuereinrichtung 300 dargestellt, die mit der Verbindungseinrichtung 90 sowie mit der Vermittlungseinrichtung 200 in Verbindung steht. Die Aufgabe der Steuereinrichtung 300 besteht darin, die Übertragungseigenschaften neu zu parametrieren, sobald ein Mobilfunkendgerät sein Funkfeld wechselt. Dies soll nachfolgend anhand eines Beispiels näher erläutert werden, bei dem davon ausgegangen wird, dass das im Funkfeld 10 befindliche Mobilfunkendgerät 210 in das Funkfeld 20 übertritt und mit der Funknetzzugriffseinrichtung 130 eine Verbindung aufbaut.

Sobald das Mobilfunkendgerät 210 bei der Funknetzzugriffseinrichtung 130 angemeldet ist, stellt diese an ihrem Ausgang A130 die entsprechende Information I zur Verfügung, dass das Mobilfunkendgerät 210 nun an der Funknetzzugriffseinrichtung 130 angemeldet ist. Diese Information I gelangt über das Netzsegment 100 sowie über die weitere Verbindungsleitung 80' zu der Steuereinrichtung 300, die diese Information I weiterverarbeitet. Konkret ist die Steuereinrichtung 300 derart ausgestaltet, dass sie nach einem Funkfeldwechsel eines der Mobilfunkendgeräte prüft, ob die dem wechselnden Mobilfunkendgerät 210 zur Verfügung stehenden Übertragungswege richtig parametriert sind. In entsprechender Weise arbeitet die Steuereinrichtung 300, wenn ein Mobilfunkendgerät, beispielsweise das Mobilfunkendgerät 210, in dem Funkfeld 20 neu angemeldet wird.

Konkret kann nämlich das Problem auftreten, dass das Mobilfunkendgerät 210 in seinem ursprünglichen Funkfeld 10 andere, beispielsweise sehr große Übertragungsressourcen zur Verfügung hatte, die in dem neuen Funkfeld 20 bzw. in dem neuen Netzsegment 100 nicht mehr verfügbar sind. Um dennoch zu gewährleisten, dass das Mobilfunkendgerät 210 im Funkfeld 20 bzw. mit Hilfe des Netzsegments 100 störungsfrei Sprach- oder Datensignale senden oder empfangen kann, müssen somit die Übertragungseigenschaften des Mobilfunkendgerätes 210 und/oder die Übertragungseigenschaften der dem Mobilfunkendgerät 210 zur Verfügung stehenden Übertragungswege entsprechend angepasst werden.

Die Steuereinrichtung 300 überprüft nun anhand von beispielsweise in einer Datenbank abgespeicherten Datensätzen, die die Übertragungsmöglichkeiten der beiden Netzsegmente 70 und 100, der Verbindungseinrichtung 90 sowie der beiden Verbindungsleitungen 80 und 80' betreffen, ob eine Neuparametrierung der Übertragungseigenschaften, die das Mobilfunkendgerät 210 betreffen, erforderlich ist. Ist dies der Fall, so übersendet die Steuereinrichtung 300 über die Verbindungseinrichtung 90 und die weitere Verbindungsleitung 80' die entsprechenden neuen Parametrierungsinformationen zu allen Komponenten, die im Hinblick auf eine störungsfreie Übertragung neu zu parametrieren sind.

Beispielsweise überträgt die Steuereinrichtung 300 einen neuen Parametersatz an die Funknetzzugriffseinrichtung 130, die mit dem Mobilfunkendgerät 210 in Verbindung steht. Alternativ kann die Steuereinrichtung 300 auch einen neuen Parametersatz unmittelbar an das Mobilfunkendgerät 210 übersenden, damit dieses beispielsweise einen anderen CODEC einsetzt und eine höhere Komprimierung von Daten durchführt sowie damit einhergehend weniger Bandbreite in Anspruch nimmt, um die von dem Mobilfunkendgerät 210 benötigten Ressourcen zu verringern.

Alternativ kann die Steuereinrichtung 300 zunächst auch mit der Vermittlungseinrichtung 200 Kontakt aufnehmen, um von dieser nach einem Funkfeldwechsel des Mobilfunkendgerätes 210 einen neuen Parametersatz für den Betrieb des Mobilfunkendgerätes 210 oder der Funknetzzugriffseinrichtung 130 zu erfragen. Beispielsweise überträgt die Vermittlungseinrichtung 200 in diesem Fall Codec-Informationen zu der Steuereinrichtung 300, damit diese die entsprechenden Codec-Informationen an die Funknetzzugriffseinrichtung 130 und/oder an das daran angeschlossene Mobilfunkendgerät 210 weiterleiten kann.

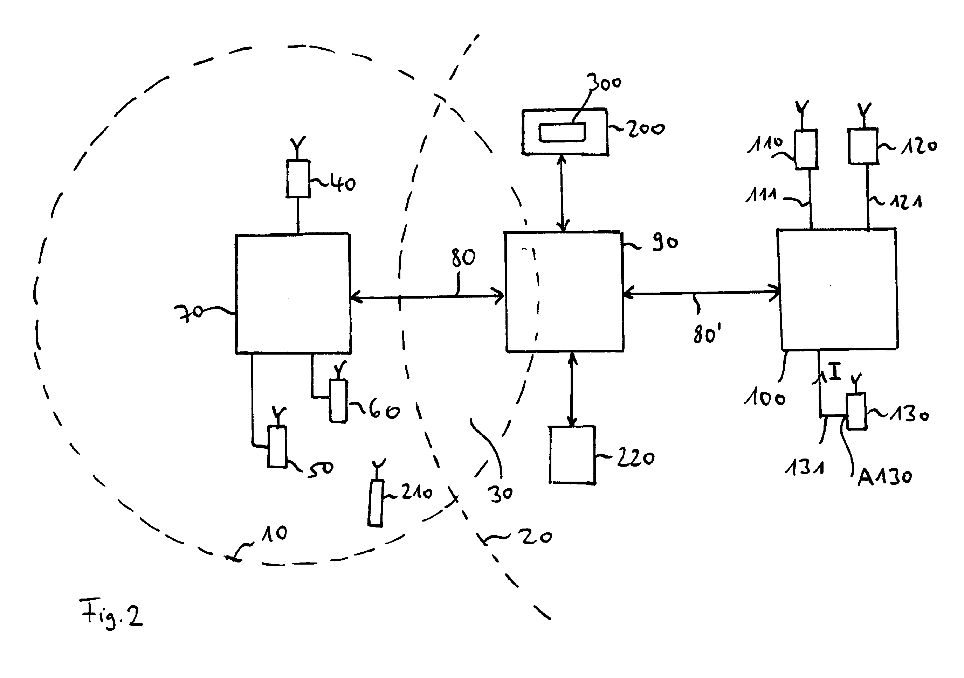

Beim Ausführungsbeispiel gemäß Figur 1 ist die Steuereinrichtung 300 eine separate Komponente, die mit der Verbindungseinrichtung 90 sowie mit der Vermittlungseinrichtung 200 in Verbindung steht. Alternativ kann die Steuereinrichtung 300 auch Bestandteil der Vermittlungseinrichtung 200 sein. Ein solches Ausführungsbeispiel ist in der Figur 2 dargestellt. Die Funktionsweise der Steuereinrichtung 300 entspricht dabei vorzugsweise der, wie sie im Zusammenhang mit der Figur 1 erläutert wurde.

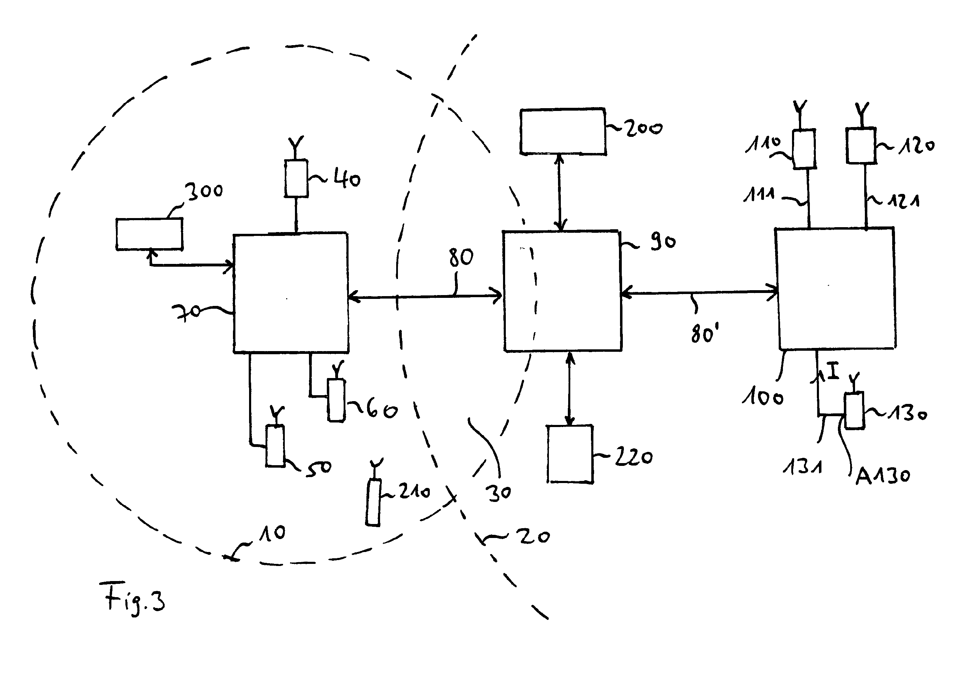

In der Figur 3 ist ein weiteres Ausführungsbeispiel für die Zuordnung der Steuereinrichtung 300 gezeigt. Bei diesem Ausführungsbeispiel ist die Steuereinrichtung 300 nicht an die Verbindungseinrichtung 90, sondern an eines der Netzsegmente der Funkfelder, beispielsweise an das Netzsegment 70 des Funkfeldes 10, angeschlossen. Auch bei diesem Ausführungsbeispiel kann die Steuereinrichtung 300 eine Neuparametrierung einzelner oder aller der dem Mobilfunkendgerät 210 zur Verfügung stehenden Übertragungswege durchführen, sobald dieses vom Funkfeld 10 in das Funkfeld 20 wechselt.

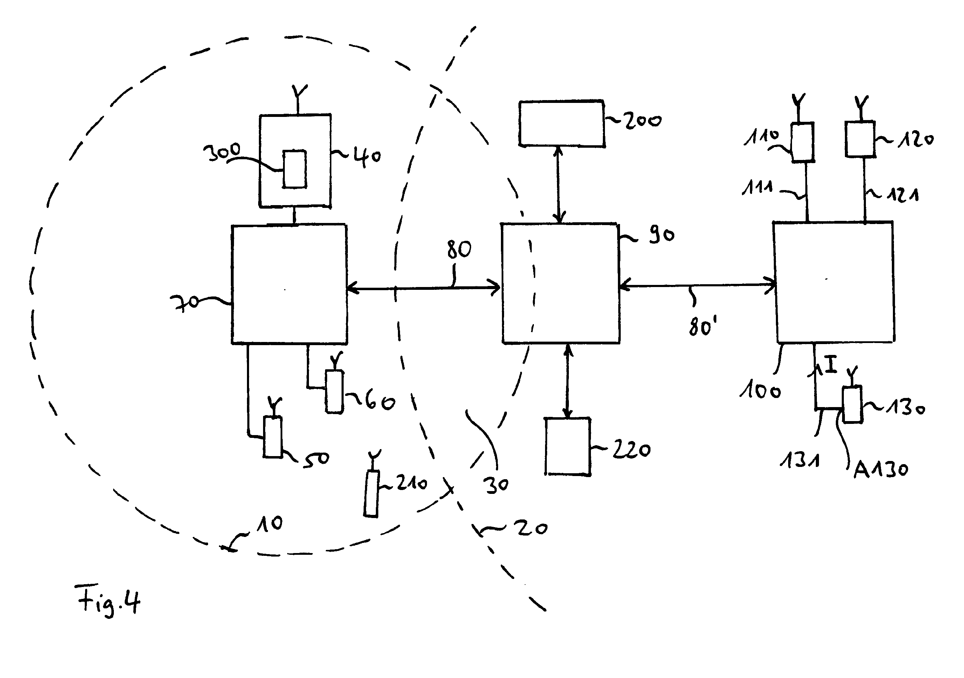

Beim Ausführungsbeispiel gemäß Figur 4 ist die Steuereinrichtung 300 innerhalb einer Funknetzzugriffseinrichtung, hier beispielsweise der Funknetzzugriffseinrichtung 40, integriert. Die Funktionsweise der Steuereinrichtung 300 entspricht auch in diesem Fall der Funktionsweise, wie sie im Zusammenhang mit der Figur 1 bereits erläutert wurde.

Wie sich den Figuren 1 bis 4 entnehmen lässt, ist es für die Funktionsweise der Anordnung unerheblich, ob die Steuereinrichtung 300 durch eine separate Komponente gebildet ist oder in einer anderen Komponente, sei es in der Vermittlungseinrichtung, in den Funknetzzugriffseinrichtungen oder in sonstigen Komponenten, beispielsweise Bestandteilen eines der beiden Netzsegmente 70 oder 100, integriert ist.

Darüber hinaus sei erwähnt, dass die Funktion der Steuereinrichtung 300 auch auf mehrere verschiedene Komponenten verteilt sein kann, wie dies im Zusammenhang mit der Figur 1 bereits angesprochen wurde. So kann die Funktion der Steuereinrichtung 300 beispielsweise zum Teil in der Vermittlungseinrichtung 200 und zum Teil in anderen Komponenten, wie beispielsweise den Funknetzzugriffseinrichtungen oder den Komponenten der beiden Netzsegmente 70 oder 100, implementiert sein.

Die Funktion der Steuereinrichtung 300 wird vorzugsweise durch ein DV-Programm realisiert, das in einer oder mehreren Komponenten 40, 50, 60, 70, 90, 100, 110, 12, 130 oder 200 oder Bestandteilen dieser Komponenten implementiert ist.

Besonders bevorzugt wird die Steuereinrichtung 300 die Übertragungseigenschaften funkfeldübergreifend derart parametrieren, dass alle Übertragungswege berücksichtigt werden, auf die das Mobilfunkendgerät, das ein Funkfeld gewechselt hat, in ein Funkfeld neu eintritt oder darin neu eingeschaltet bzw. angemeldet worden ist, zugreifen kann. Dabei wird die Steuereinrichtung 300 die Parametrierung vorzugsweise derart vornehmen, dass eine Daten- oder Sprachübertragung auch über den leistungsschwächsten Übertragungsweg (z. B. wegen geringer Bandbreite, großem Jitter, hohen Paketverlusten) mit einem vorgegebenen Mindestqualitätsstandard (Quality of Service) erfolgen kann.

### Bezugszeichenliste

- 10: Funkfeld
- 20: Funkfeld
- 30: Überlappungsbereich
- 40: Funknetzzugriffseinrichtung
- 50: Funknetzzugriffseinrichtung
- 60: Funknetzzugriffseinrichtung
- 70: Netzsegment
- 80,80': Verbindungsleitung
- 90: Verbindungseinrichtung
- 100: Netzsegment
- 110: Funknetzzugriffseinrichtung
- 120: Funknetzzugriffseinrichtung
- 130: Funknetzzugriffseinrichtung
- 200: Vermittlungseinrichtung
- 210: Mobilfunkendgerät
- 220: schnurgebundenes Telefon
- 300: Steuereinrichtung

## Patentansprüche

1. Anordnung mit
- zumindest zwei Funkfeldern (10, 20),
- wobei jedes Funkfeld jeweils ein leitungsgebundenes Netzsegment (70, 100) sowie ein oder mehrere daran leitungsgebunden angeschlossene Funknetzzugriffseinrichtungen (40, 50, 60, 110, 120, 130)) aufweist, an die jeweils mindestens ein Mobilfunkendgerät (10) funkmäßig anschließbar ist, und
- wobei die Netzsegmente der mindestens zwei Funkfelder an eine Verbindungseinrichtung (90) angeschlossen sind, die die beiden Netzsegmente miteinander verbindet,
**dadurch gekennzeichnet dass**
- eine Steuereinrichtung (300) vorhanden ist, die derart ausgestaltet ist, dass sie, sobald eines der Mobilfunkendgeräte von einem der Funkfelder zu einem anderen der Funkfelder wechselt, selbsttätig die Übertragungseigenschaften zumindest in einem Punkt oder in einem Abschnitt der dem Mobilfunkendgerät, das das Funkfeld gewechselt hat, zur Verfügung stehenden Übertragungswege neu parametriert.

2. Anordnung nach Anspruch 1, **dadurch gekennzeichnet, dass** die Steuereinrichtung derart ausgestaltet ist, dass sie, sobald eines der Mobilfunkendgeräte von einem der Funkfelder zu einem anderen der Funkfelder wechselt, selbsttätig eine Neuparametrierung der Übertragungseigenschaften zumindest in einem Punkt oder in einem Abschnitt des Verbindungsweges zwischen dem Mobilfunkendgerät, das das Funkfeld gewechselt hat, und der Verbindungseinrichtung vornimmt.

3. Anordnung nach Anspruch 1 oder 2, **dadurch gekennzeichnet, dass** die leitungsgebundenen Netzsegmente der zumindest zwei Funkfelder unterschiedliche Übertragungseigenschaften aufweisen.

4. Anordnung nach Anspruch 1 oder 2, **dadurch gekennzeichnet, dass** die leitungsgebundenen Netzsegmente der zumindest zwei Funkfelder identische Übertragungseigenschaften aufweisen, wobei sich die Übertragungseigenschaften der Verbindungseinrichtung von denen der beiden Netzsegmente unterscheidet.

5. Anordnung nach Anspruch 3 oder 4, **dadurch gekennzeichnet, dass** sich die Übertragungseigenschaften bezüglich der Bandbreiten, der Paketlaufzeiten, der Paketverlustraten und/oder des Jitters unterscheiden.

6. Anordnung nach einem der voranstehenden Ansprüche, **dadurch gekennzeichnet, dass** die Steuereinrichtung die Neuparametrierung der Übertragungseigenschaften derart vornimmt, dass eine für das Mobilfunkendgerät, das das Funkfeld gewechselt hat, vorgegebene Übertragungsqualität erreicht wird.

7. Anordnung nach einem der voranstehenden Ansprüche, **dadurch gekennzeichnet, dass** die beiden leitungsgebundenen Netzsegmente jeweils durch ein LAN-Netzwerk gebildet sind.

8. Anordnung nach einem der voranstehenden Ansprüche, **dadurch gekennzeichnet, dass** die Steuereinrichtung die Neuparametrierung der Übertragungseigenschaften **dadurch** vornimmt, dass sie zumindest das Mobilfunkendgerät oder die Funknetzzugriffseinrichtung, zu dem das Mobilfunkendgerät gewechselt hat, neu parametriert.

9. Anordnung nach einem der voranstehenden Ansprüche, **dadurch gekennzeichnet, dass** die Funknetzzugriffseinrichtungen durch WLAN-Access-Points oder durch DECT-Basisstationen und die Mobilfunkendgeräte durch WLAN- oder DECT-Endgeräte gebildet sind.

10. Verfahren zum Betreiben einer Anordnung nach einem der voranstehenden Ansprüche, **dadurch gekennzeichnet, dass**
- festgestellt wird, wenn eines der Mobilfunkendgeräte von einem der Funkfelder zu einem anderen der Funkfelder wechselt, und
- die Übertragungseigenschaften zumindest in einem Punkt oder in einem Abschnitt der dem Mobilfunkendgerät, das das Funkfeld gewechselt hat, zur Verfügung stehenden Übertragungswege neu parametriert wird.
